# EUROPÄISCHE PATENTSCHRIFT

(11) **EP 2 395 643 B1**
(45) Veröffentlichungstag und Bekanntmachung des Hinweises auf die Patenterteilung: **24.08.2016**
(21) Anmeldenummer: 11162279.1
(22) Anmeldetag: 13.04.2011
(51) Int. Cl.: H02M 5/257

(54) **Verfahren zum Einstellen eines Wechselstromstellers**
Method for adjusting an AC power controller
Procédé destiné au réglage d'un gradateur de courant alternatif

(30) Priorität: 20.04.2010 DE 102010015803
(43) Veröffentlichungstag der Anmeldung: 14.12.2011
(73) Patentinhaber: Advanced Energy Industries Gmbh, 72555 Metzingen (DE)
(72) Erfinder: Hesse, Chrstian, 59581, Warstein (DE); Schaffarra, Christian, 59602, Rüthen (DE)
(74) Vertreter: Graefe, Jörg

(56) Entgegenhaltungen:
- EP-A2- 2 031 750
- WO-A1-2010/049185
- US-B1- 6 191 568
- "Inductive load control with AC switches", , 9. März 2010 (2010-03-09), Seiten 1-7, XP55029169, ST website Gefunden im Internet: URL:http://www.st.com/internet/com/TECHNIC AL_RESOURCES/TECHNICAL_LITERATURE/APPLICAT ION_NOTE/CD00003867.pdf [gefunden am 2012-06-06]
- 'SCR19/39 Power Controllers Instruction Manual', [Online] 31 Dezember 2004, Seite 28PP, XP055143806 Gefunden im Internet: <URL:http://www.omega.com/Manuals/manualpdf /M4100.pdf> [gefunden am 2014-10-01]
- CHRISTIAN FINGER ET AL: 'Entwicklung, Aufbau und Erprobung eines Low-Cost- Steuergerätes mit Mikrocontroller für den universellen Einsatz zur Steuerung von Drehstrom-Asynchronmaschinen', [Online] 20 Dezember 1999, Seiten 1 - 117, XP055192382 Gefunden im Internet: <URL:http://www.fingers-welt.de/gallerie/ei gen/elektro/diplom/Diplomarbeit.pdf> [gefunden am 2015-05-29]

## Beschreibung

Die vorliegende Erfindung betrifft ein Verfahren zum Einstellen eines Wechselstromstellers.

Aus dem Stand der Technik sind Wechselstromsteller mit einer Phasenanschnittsteuerung bekannt. Bei einem Wechselstromsteller mit einer Phasenanschnittsteuerung fließt - solange die vom Steller übertragene Leistung größer null sein soll - während jeder Halbwelle ein Strom von einem Eingang des Stellers zu einem Ausgang des Stellers, an den eine Last angeschlossen ist. Zum Einstellen der Leistung der Last kann der Wechselstromsteller durch die Phasenanschnittsteuerung eingestellt werden. Im Leistungszweig sind Stromrichterventile, im Regelfall antiparallel geschaltete Thyristoren oder Triacs geschaltet. Der Strom fließt dann ab einem Zündzeitpunkt bis zu seinem natürlichen Nulldurchgang.

Um einen großen Spannungsbereich durch eine Phasenanschnittsteuerung abdecken zu können wurde die sogenannte Spannungsfolgesteuerung geschaffen, die in verschiedenen Druckschriften zu Schutzrechten der Anmelderin bereits offenbart worden ist. Die Spannungsfolgesteuerung hat außerdem Vorteile gegenüber einer Phasenanschnittsteuerung.

Ein Wechselstromsteller mit einer Spannungsfolgesteuerung weist erste eingangsseitige Anschlüsse zur Verbindung mit je einer sekundärseitigen Anzapfung eines Transformators auf. Alle ersten eingangsseitigen Anschlüsse sind über je eine Schaltung von Stromrichterventilen mit einem ersten Anschluss eines Ausgangs des Leistungsstellers verbunden. Ein zweiter eingangsseitiger Anschluss kann mit einer weiteren sekundärseitigen Anzapfung des Transformators verbunden sein. Dieser zweite Anschluss des Eingangs ist dann mit einem zweiten Anschluss des Ausgangs verbunden. An den ersten Anschluss des Ausgangs wird der Phasenleiter und an den zweiten Anschluss des Ausgangs der Nullleiter einer Last angeschlossen.

Die mit dem ersten Anschluss des Ausgangs des Leistungsstellers verbundenen Schaltungen von Stromrichterventilen werden als Stufen bezeichnet. Ein Wechselstromsteller mit einer zweistufigen Spannungsfolgesteuerung wird beispielhaft kurz beschrieben.

An jede von zwei Anzapfungen einer Sekundärseite eines Transformators sind antiparallele Thyristoren angeschlossen, die als erste und zweite Stufe bezeichnet werden. Über diese antiparallelen Thyristoren sind die Anzapfungen mit einem Ausgang des Stellers verbunden. Beide Stufen sind also mit dem Ausgang des Stellers verbunden.

Für einen unteren Ausgangsspannungsbereich werden die Thyristoren der ersten Stufe mit einer Phasenanschnittsteuerung betrieben, wobei die erste Stufe an der sekundärseitigen Anzapfung mit der geringeren Spannung zu einem Nullleiter angeschlossen ist, während die Thyristoren der zweiten Stufe an die sekundärseitige Anzapfung mit der höheren Spannung angeschlossen sind und in diesem Spannungsbereich stets sperren. In einem oberen Bereich der Ausgangsspannung sind die Thyristoren der ersten Stufe im Regelfall durchgeschaltet, während die Thyristoren der zweiten Stufe mit einer Phasenanschnittsteuerung betrieben werden. Durch eine solche Kombination von zwei Paaren von antiparallel geschalteten Thyristoren mit Phasenanschnittsteuerung, die zum Abdecken eines Spannungsbereichs aufeinanderfolgend geschaltet werden, ist eine Abdeckung eines großen Spannungsbereiches möglich.

Eine mehrstufige Spannungsfolgesteuerung ist in dem Dokument WO 2010/049185 A1 beschrieben. Ein Beispiel einer zweitstufigen Spannungsfolgesteuerung ist in dem Dokument US 6 91 568 B1 offenbart.

Ein Vorteil eines Wechselstromstellers mit einer Spannungsfolgesteuerung gegenüber einem Wechselstromsteller mit einer Phasenanschnittsteuerung mit gleicher Nennspannung ist, dass im höheren Spannungsbereich stets ein Strom fließt, der Strom also nicht lückt. Damit kann beispielsweise ein höherer Leistungsfaktor erreicht werden, als bei einem Wechselstromsteller mit einer Phasenanschnittsteuerung.

Ein Problem eines Leistungsstellers mit einer Spannungsfolgesteuerung ist, dass am Ende eines Einstellbereichs der Stufen eine Verstellung des Zündwinkels nur eine geringere Wirkung auf die Änderung der Spannung hat. Die Ausgangsspannung ist insbesondere am Ende des Einstellbereichs einer Spannungsstufe nicht linear vom Zündwinkel abhängig. Bei einer ohmsch-induktiven Belastung des Leistungsstellers ist das besonders ausgeprägt. Das Problem tritt übrigens auch bei einem Wechselstromsteller mit einer Phasenabschnittsteuerung auf.

Für viele Anwendungen von Leistungsstellern ist es allerdings von Vorteil, wenn die Ausgangsspannung eine lineare Abhängigkeit vom Zündwinkel hat. Dadurch kann beispielsweise auch die Einrichtung einer Regelung vereinfacht werden.

Ein Wechselstromsteller kann auch so ausgestaltet sein, dass die Stufen primärseitig an Anzapfungen eines Transformators angeschlossen sind. Die Sekundärseite des Transformators bildet dann den Ausgang des Wechselstromstellers. Bei einem solchen Steller treten die gleichen Nachteile auf.

Der Erfindung liegt daher das technische Problem zugrunde ein Verfahren zum Einstellen eines Wechselstromstellers nach dem Oberbegriff des Anspruchs 1 vorzuschlagen, welches die Vorteile der Spannungsfolgesteuerung beibehält und zugleich die Abhängigkeit der Ausgangsspannung von den Zündwinkeln linearisiert.

Diese Aufgabe wird erfindungsgemäß dadurch gelöst, dass in einem Bereich zwischen dem ersten Spannungsbereich und dem zweiten Spannungsbereich beide Stufen mit einem Phasenanschnitt betrieben werden und die Ausgangsspannung des Wechselstromstellers durch ein Einstellen der Spannung am Ausgang der ersten Stufe und/oder der zweiten Stufe einstellbar ist. Alternativ ist es möglich, die beiden Stufen im Bereich zwischen dem ersten Spannungsbereich und dem zweiten Spannungsbereich beide mit Phasenabschnitt oder mit Phasenabschnitt und Phasenanschnitt zu betreiben.

Im Unterschied zu einem Wechselstromsteller mit einer Spannungsfolgesteuerung, wird bei einem Erhöhen der Ausgangsspannung des Stellers nicht der Zündwinkel einer Stufe nach der anderen erhöht. Vielmehr werden in dem Bereich zwischen dem ersten und dem zweiten Spannungsbereich beide Stufen gleichzeitig mit einem Phasenanschnitt und/oder Phasenabschnitt betrieben.

In dem Übergangsbereich können 10 bis 15 % des maximal einstellbaren Zündwinkels der ersten und/oder der zweiten Stufe einstellbar sein. Denkbar ist auch, dass in dem Übergangsbereich 10 bis 15% der Nennspannung des Wechselstromstellers eingestellt werden können.

Der in dem Übergangsbereich einstellbare Zündwinkel kann von einer Phasenverschiebung zwischen Ausgangsspannung und Ausgangsstrom abhängen. Damit ist es möglich in Abhängigkeit von der Art der Last unterschiedlich stark linearisierend einzugreifen. Weitere Merkmale und Vorteile der vorliegenden Erfindung werden anhand der nachfolgenden Beschreibung der Zeichnungen näher erläutert. Darin zeigen
- Fig. 1: den zeitlichen Verlauf der Ausgangsspannung eines Wechselstromstellers in einem ersten Spannungsbereich,
- Fig. 2: den zeitlichen Verlauf der Ausgangsspannung des erfindungsgemäßen Wechselstromstellers in einem zweiten Spannungsbereich,
- Fig. 3: den zeitlichen Verlauf der Ausgangsspannung in einem Bereich zwischen dem ersten Spannungsbereich und dem zweiten Spannungsbereich,
- Fig. 3a: den zeitlichen Verlauf des Zündimpulses einer ersten Stufe,
- Fig. 3b: den zeitlichen Verlauf des Zündimpulses einer zweiten Stufe,
- Fig. 4: ein Schaltbild des Wechselstromstellers,
- Fig. 5: ein Spannungs-Zündwinkel-Diagramm beim Betreiben des Wechselstromstellers mit einer Spannungsfolgesteuerung und
- Fig. 6: ein Spannungs-Zündwinkel-Diagramm beim Betreiben des Wechselstromstellers mit einer erfindungsgemäßen modifizierten Spannungsfolgesteuerung.

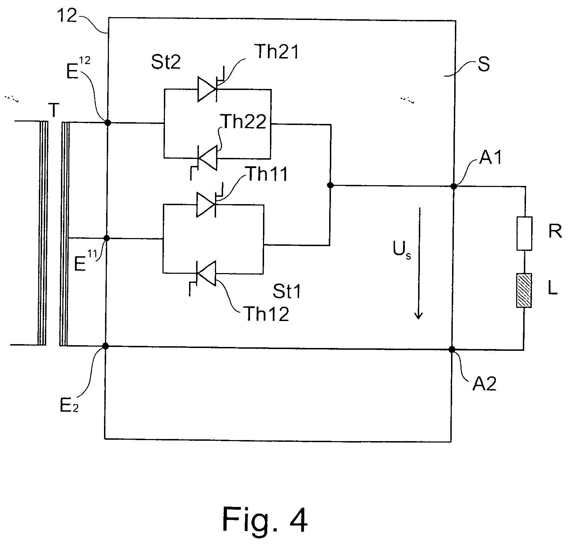

Der in Figur 4 dargestellte Wechselstromsteller S kann mit einer zweistufigen Spannungsfolgesteuerung betrieben werden. Er ist auch zum Betrieb mit einer erfindungsgemäßen modifizierten Spannungsfolgesteuerung geeignet.

Der Steller S weist einen Eingang E11, E12, E2 auf, mit dem er an einen Transformator T angeschlossen ist.

Der Transformator T kann sekundärseitig an ein einphasiges Wechselstromnetz angeschlossen werden. Sekundärseitig weist der Transformator T drei Anzapfungen auf. Zwei erste Anzapfungen sind mit Anschlüssen E11, E12 des Eingangs des Stellers S verbunden. Eine zweite Anzapfung ist mit einem Anschluss E2 des Eingangs verbunden. Das Potential der zweiten Anzapfung, wie auch des zweiten Anschlusses E2 des Eingangs bildet das Bezugspotential, d.h. das Nullpotential. Zwischen den ersten Anzapfungen bzw. den ersten Anschlüssen E11, E12 und dem Nullpotential fällt jeweils eine Spannung ab, wobei die Spannung am ersten Anschluss E11 kleiner ist als die Spannung am ersten Anschluss E12.

Der Steller S weist zwei Paare St1, St2 antiparallel geschaltete Thyristoren T11, Th12, Th21, Th22 auf. Das Paar St1 ist einerseits an den ersten Anschluss E11 und andererseits an einen ersten ausgangsseitigen Anschluss A1 des Stellers S angeschlossen. Das Paar St2 ist einerseits an den ersten Anschluss E12 und andererseits ebenfalls an den ersten Anschluss A1 des Ausgangs angeschlossen. Die Paare St1, St2 bilden Stufen des Stellers S und werden nachfolgend auch als solche bezeichnet.

Neben dem ersten Anschluss A1 weist der Ausgang des Stellers einen zweiten Anschluss A2 auf, der unmittelbar mit dem zweiten Anschluss A2 des Eingangs verbunden ist und an dem im Betrieb auch das Nullpotential anliegt.

Am Ausgang jeder Stufe St1, St2 des Stellers S kann durch eine entsprechende Steuerung eines Zündwinkels und dem entsprechend eines Phasenanschnitts eine Spannung zwischen dem Nullpotential und dem Potential am ersten zugeordneten eingangsseitigen Anschluss E11, E12 eingestellt werden.

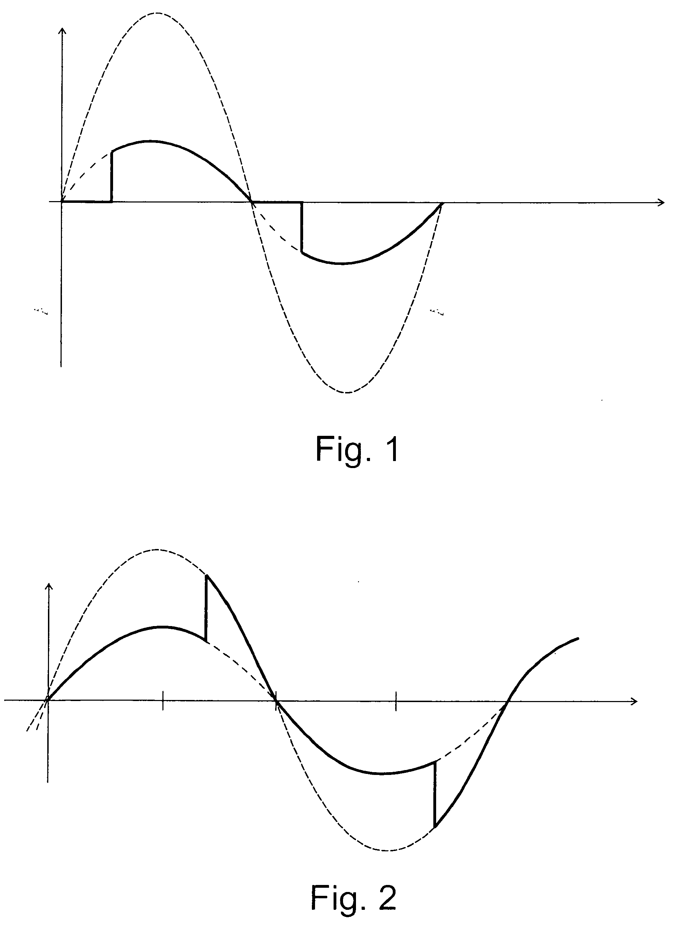

Erfindungsgemäß wird der Steller so betrieben, dass in einem ersten unteren Spannungsbereich der Zündwinkel der ersten Stufe St1 variiert wird, um am Ausgang des Stellers S Spannungen zwischen 0 und ca. 68% der maximalen Ausgangsspannung einzustellen. Die zweite Stufe St2 sperrt einen Strom in diesem Spannungsbereich (Fig. 1).

In einem zweiten oberen Spannungsbereich kann dagegen der Zündwinkel der Thyristoren Th21, Th22 der zweiten Stufe variiert werden, um am Ausgang des Stellers S Spannungen zwischen ca. 83% und 100% der maximalen Ausgangsspannung einzustellen. Die Zündwinkel der Thyristoren der ersten Stufe St1 sind dann auf 0° eingestellt, dass heißt, dass die erste Stufe die Spannung vom ersten Anschluss E11 des Eingangs zum ersten Anschluss des Ausgangs A1 durchgeschaltet ist. Es liegt also vom Beginn einer Halbwelle bis zum Zündzeitpunkt der zweiten Stufe wenigstens die maximale Ausgangsspannung der ersten Stufe St1 am Ausgang des Stellers S an (Fig. 2).

Der erfindungsgemäße Betrieb des Stellers S im ersten und zweiten Spannungsbereich unterscheidet sich nicht von einem Wechselstromsteller mit einer herkömmlichen Spannungsfolgesteuerung. Der Unterschied zwischen der herkömmlichen Spannungsfolgesteuerung und der erfindungsgemäßen modifizierten Spannungsfolgesteuerung liegt im Bereich zwischen dem ersten Spannungsbereich und dem zweiten Spannungsbereich. Bei einer herkömmlichen Spannungsfolgesteuerung grenzen der erste Spannungsbereich und der zweite Spannungsbereich nahtlos aneinander an. Der erste Spannungsbereich deckt bei gesperrter zweiter Stufe beispielsweise 0 bis 75% der maximalen Spannung durch Veränderung der Zündwinkel der ersten Stufe und der zweite Spannungsbereich deckt bei durchgeschalteter erster Stufe 75 bis 100% der maximalen Spannung durch Veränderung der Zündwinkel der zweiten Stufe ab.

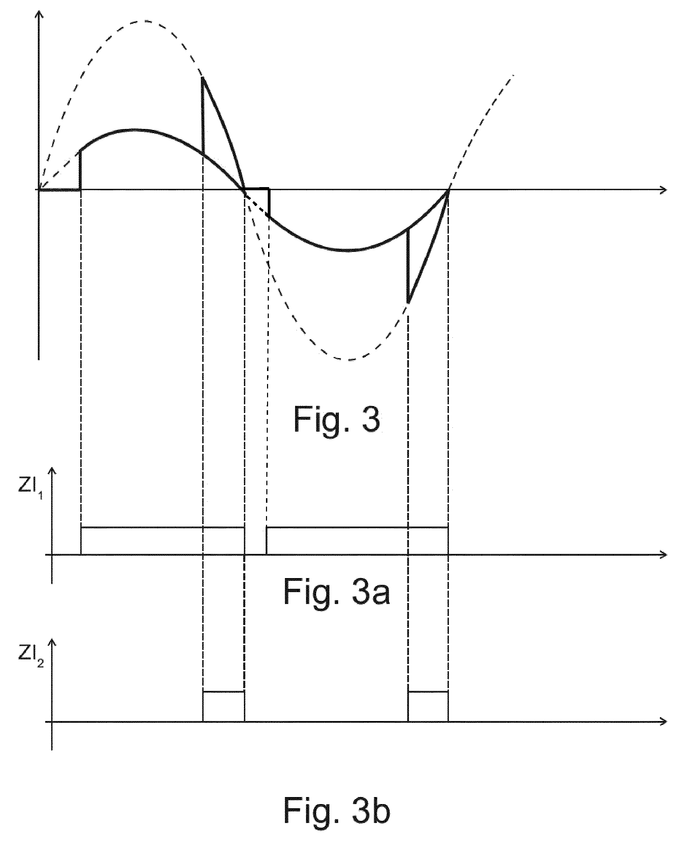

Bei der erfindungsgemäß modifizierten Spannungsfolgesteuerung gibt es einen Bereich zwischen dem ersten Spannungsbereich und dem zweiten Spannungsbereich, in der das Einstellen der Ausgangsspannung durch eine Veränderung der Zündwinkel der ersten Stufe und/oder der zweiten Stufe erfolgt. Kennzeichnend ist für diesen Bereich, dass die erste Stufe einen Zündwinkel größer als Null hat, also nicht vollständig durchschaltet und die Zündwinkel der zweiten Stufe so gewählt sind, dass die zweite Stufe nicht vollständig sperrt. Die Zündwinkel der ersten Stufe sind aber deutlich kleiner als die Zündwinkel der zweiten Stufe (Fig. 3, 3a, 3b).

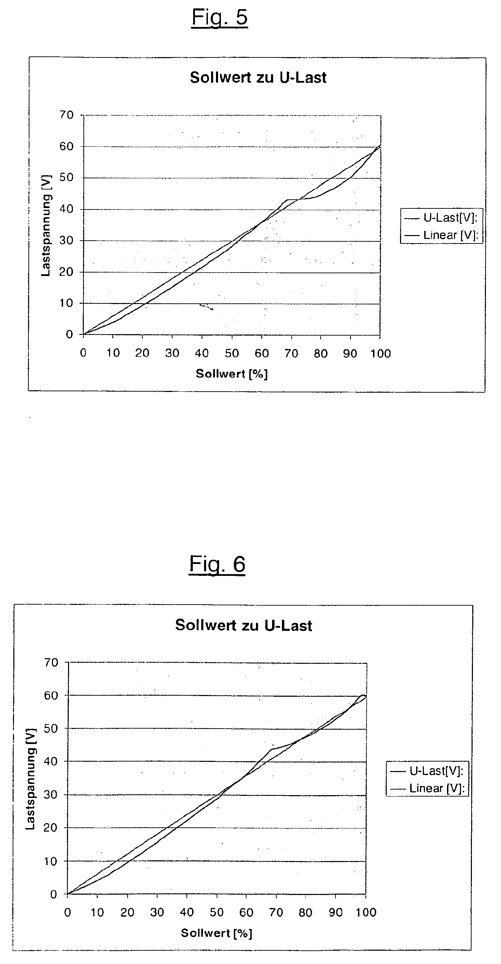

Ein Vergleich der in den Figuren 5 und 6 dargestellten Diagramme zeigt, dass durch das erfindungsgemäße Verfahren eine Linearisierung der Abhängigkeit von den Zündwinkeln erfolgt.

## Patentansprüche

1. Verfahren zum Einstellen eines Wechselstromstellers (S),
- wobei der Wechselstromsteller (S) wenigstens zwei als Stufen (St1, St2) bezeichnete Schaltungen von Stromrichterventilen (Th11, Th12, Th21, Th22) aufweist und die Stufen zumindest mittelbar mit einem ersten Anschluss (A) eines Ausgangs des Wechselstromstellers (S) verbunden sind,
- wobei die Spannung an einem Ausgang jeder Stufe (St1, St2) durch eine Veränderung eines Zündwinkels eines Phasenanschnitts eingestellt wird,
- wobei eine Ausgangsspannung (Us) des Wechselstromstellers (S) in einem ersten Spannungsbereich bei einer gesperrten zweiten Stufe (St2) durch eine erste Stufe (St1) eingestellt wird und die Ausgangsspannung (U_{S}) des Wechselstromstellers (S) in einem zweiten gegenüber dem ersten Spannungsbereich höheren Spannungsbereich bei einem an der ersten Stufe (St1) anliegendem Zündimpuls mit einem Zündwinkel von 0° durch die zweite Stufe (St2) eingestellt wird,
**dadurch gekennzeichnet, dass**
in einem Bereich der Ausgangsspannung (U_{S}) des Wechselstromstellers (S) zwischen dem ersten Spannungsbereich und dem zweiten Spannungsbereich die erste Stufe (St1) und die zweite Stufe (St2) während einer halben Periode mit einem Phasenanschnitt betrieben werden und die Ausgangsspannung (U_{S}) des Wechselstromstellers (S) durch ein Einstellen der Spannung am Ausgang der ersten Stufe (St1) und/oder der zweiten Stufe (St2) eingestellt wird, wobei die erste Stufe einen Zündwinkel größer als Null hat, also nicht vollständig durchschaltet, und ein Zündwinkel der zweiten Stufe so gewählt wird, dass die zweite Stufe nicht vollständig sperrt, wobei der Zündwinkel der ersten Stufe kleiner ist als der Zündwinkel der zweiten Stufe.

2. Verfahren nach Anspruch 1, **dadurch gekennzeichnet, dass** in dem Bereich zwischen dem ersten Spannungsbereich und dem zweiten Spannungsbereich 10 bis 15 % des maximal einstellbaren Zündwinkels der ersten und/oder der zweiten Stufe (St1, St2) einstellbar sind.

3. Verfahren nach Anspruch 2, **dadurch gekennzeichnet, dass** der in dem Bereich zwischen dem ersten Spannungsbereich und dem zweiten Spannungsbereich einstellbare Zündwinkel von einer Phasenverschiebung zwischen Ausgangsspannung (U_{S}) und Ausgangsstrom abhängt.

## Claims

1. Method for adjusting an AC power controller (S),
- wherein the AC power controller (S) comprises at least two circuits of converter valves (Thll, Th12, Th21, Th22), said circuits being designated as stages (St1, St2), and the stages are connected at least indirectly to a first terminal (A) of an output of the AC power controller (S),
- wherein the voltage at an output of each stage (St1, St2) is adjusted by a variation of a firing angle of a phase cutting, and
- wherein an output voltage (U_{S}) of the AC power controller (S) in a first voltage range, in the case where a second stage (St2) is turned off, is adjusted by a first stage (St1) and the output voltage (U_{S}) of the AC power controller (S) in a second voltage range, higher than the first voltage range, in the case of a firing pulse present at the first stage (St1) with a firing angle of 0°, is adjusted by the second stage (St2),
**characterized in that**
in a range of the output voltage (U_{S}) of the AC power controller (S) between the first voltage range and the second voltage range the first stage (St1) and the second stage (St2) are operated during half a period with a phase cutting and the output voltage (U_{S}) of the AC power controller (S) is adjusted by an adjustment of the voltage at the output of the first stage (St1) and/or of the second stage (St2), wherein the first stage has a firing angle of greater than 0°, that is to say does not turn on completely, and a firing angle of the second stage is chosen such that the second stage does not turn off completely, wherein the firing angle of the first stage is less than the firing angle of the second stage.

2. Method according to Claim 1, **characterized in that** 10 to 15% of the maximum adjustable firing angle of the first and/or of the second stage (St1, St2) is adjustable in the range between the first voltage range and the second voltage range.

3. Method according to Claim 2, **characterized in that** the firing angle that is adjustable in the range between the first voltage range and the second voltage range is dependent on a phase shift between output voltage (U_{S}) and output current.

## Revendications

1. Procédé pour le réglage d'un gradateur de courant alternatif (S),
- dans lequel le gradateur de courant alternatif (S) présente au moins deux circuits désignés comme étant des étages (St1, St2) de soupapes de convertisseur (Thll, Th12, Th21, Th22), et les étages étant raccordés au moins indirectement à un premier raccordement (A) d'une sortie du gradateur de courant alternatif (S),
- dans lequel la tension à une sortie de chaque étage (St1, St2) est réglée grâce à une modification d'un angle de retard d'un découpage de phase,
- dans lequel une tension de sortie (U_{S}) du gradateur de courant alternatif (S) est réglée grâce à un premier étage (St1) dans une première plage de tensions avec un deuxième étage (St2) bloqué, et la tension de sortie (U_{S}) du gradateur de courant alternatif (S) étant réglée grâce au deuxième étage (St2) dans une deuxième plage de tensions plus élevée que la première plage de tensions avec une impulsion de déclenchement appliquée au premier étage (St1) avec un angle de retard de 0°,
**caractérisé en ce que**
dans une plage de la tension de sortie (U_{S}) du gradateur de courant alternatif (S) entre la première plage de tensions et la deuxième plage de tensions, le premier étage (St1) et le deuxième étage (St2) sont exploités pendant une demi période avec un découpage de phase, et la tension de sortie (U_{S}) du gradateur de courant alternatif (S) étant réglée grâce à un réglage de la tension à la sortie du premier étage (St1) et/ou du deuxième étage (St2), dans lequel le premier étage a un angle de retard supérieur à zéro, c'est-à-dire ne connecte pas complètement, et un angle de retard du deuxième étage étant choisi de manière à ce que le deuxième étage ne bloque pas complètement, dans lequel l'angle de retard du premier étage est inférieur à l'angle de retard du deuxième étage.

2. Procédé selon la revendication 1, **caractérisé en ce que**, dans la plage entre la première plage de tensions et la deuxième plage de tensions, on peut régler 10 à 15% de l'angle de retard réglable au maximum du premier et/ou du deuxième étage (St1, St2).

3. Procédé selon la revendication 2, **caractérisé en ce que** l'angle de retard pouvant être réglé dans la plage entre la première plage de tensions et la deuxième plage de tensions dépend d'un décalage de phase entre une tension de sortie (U_{S}) et un courant de sortie.
